# EUROPÄISCHE PATENTSCHRIFT

(11) **EP 2 963 197 B1**
(45) Veröffentlichungstag und Bekanntmachung des Hinweises auf die Patenterteilung: **22.11.2017**
(21) Anmeldenummer: 14175099.2
(22) Anmeldetag: 30.06.2014
(51) Int. Cl.: E04B 1/74, B02C 21/00, D01B 1/30, F16L 59/00

(54) **Verfahren zum zerkleinernden Aufbereiten von nachwachsenden Rohstoffen in Form von Bastpflanzenmaterial, für die Weiterverarbeitung, insbesondere zu Dämmstoffmatten, sowie die nach diesem Verfahren erhältlichen zerkleinerten nachwachsenden Rohstoffe in Form von zerkleinerten Bastpflanzenmaterialien.**
Method for crushing renewable raw materials of flax plant material, for further processing, in particular to form insulating material mats, and crushed renewable raw materials obtained by this process.
Procédé de préparation de broyage de matières premières renouvelables en fibre végétale, pour la transformation, notamment en nattes isolantes, et les matières premières renouvelables broyées obtenues selon ce procédé.

(43) Veröffentlichungstag der Anmeldung: 06.01.2016
(73) Patentinhaber: NAPORO Klima Dämmstoff GmbH, 5280 Braunau am Inn (AT)
(72) Erfinder: Schwemmer, Robert, 84367 Reut (DE); Mükisch, Herbert, 3072 Kasten (AT)
(74) Vertreter: Metten, Karl-Heinz

(56) Entgegenhaltungen:
- EP-A2- 1 932 643
- WO-A1-2008/107664
- DE-A1-102011 016 562
- DE-B3-102007 019 849
- US-A- 4 528 037
- US-A- 5 678 773
- US-A1- 2002 162 298

## Beschreibung

Die vorliegende Erfindung betrifft ein Verfahren zum zerkleinernden Aufbereiten von nachwachsenden Rohstoffe in Form von Bastpflanzenmaterial, für die Weiterverarbeitung, insbesondere zu Faservliesmatten. Die Wärmedämmung von Außenfassaden gewinnt vor dem Hintergrund knapper werdender Ressourcen und steigender Energiekosten zunehmend an Bedeutung. Zu diesem Zweck werden sowohl Dämmplatten auf Basis geschäumter Kunststoffe, beispielsweise sogenannte EPS-Dämmplatten, als auch Dämmplatten auf der Basis von Naturfasern, beispielsweise Hanffaserdämmplatten, eingesetzt. Um aus geeigneten Pflanzenmaterialien Naturfasern für Dämmstoffmatten zu gewinnen, werden diese in Nass- oder Trockenverfahren aufgeschlossen und von Schäben befreit. Bei Schäben handelt es sich um die holzartigen Bestandteile des Pflanzenmaterials. Schäben erschweren den Verarbeitungsprozess von Pflanzenmaterialien zu Dämmstoffmatten regelmäßig nachhaltig. Sie verfügen über eine hohe Zugfestigkeit und beschädigen daher insbesondere die rotierenden Elemente von Verarbeitungsanlagen. Auch können Schäben und zu lange Fasern zu Verstopfungen der Zuführleitungen der Produktionsanlagen führen. Aus diesem Grunde werden vor der Weiterverwendung der zerkleinerten Pflanzenmaterialien für die Vliesherstellung die Pflanzenschäben regelmäßig vom Fasermaterial abgetrennt.

Bastpflanzenmaterialien wie Flachs und Hanf können auf unterschiedliche Weise aufgeschlossen werden. Bei der Tauröste wird das geerntete Pflanzenmaterial für mehrere Wochen auf dem Feld ausgelegt und den Witterungsbedingungen ausgesetzt. Unterstützt durch Tau und Regen setzt ein mikrobieller Röstprozess ein, bei dem die Fasern verfeinert werden. Auf diese Weise wird die Abtrennung der Pflanzenfasern von dem anhaftenden Holz erleichtert. Alternativ kommt die Wasserröste zum Einsatz, bei der das Baststroh in warmem Wasser 3 bis 5 Tage gelagert und anschließend zum Trocknen aufs Feld ausgebracht wird. Gemäß der DE 37 28 074 kann die Röste von Bastpflanzenmaterialien auch bei Heißdampf mit einer Temperatur zwischen 120° C und 300°C und bei einem Druck von 2 bis 50 Bar während einer Zeitdauer von maximal 60 Minuten durchgeführt werden.

Beispielsweise findet sich in der DE 195 18 188 A1 ein Verfahren beschrieben, wie Bastfasergewächse von Schäben befreit werden können, um auf diese Weise technisch verwendbare Kurzfasern zu erhalten. Hierfür ist das Bastfaserstroh zunächst auf eine angestrebte kurze Faserlänge vorzuzerkleinern. Sodann hat die Entfaserung in einer Entfaserungsmaschine zu erfolgen. Und in einem dritten Verfahrensschritt sind die abgelösten Schäben von den Fasern zu trennen.

Aus der DE 875 137 ist ein Verfahren zu Herstellung von Faserplatten bekannt, das die gesamte Nutz- bzw. Kulturpflanze verwendet. Diese sind in einer geeigneten Mahleinrichtung zusammen mit Wasser bis zur Verfilzungsfähigkeit zu zerfasern. Aus dem Faserbrei ist durch Absetzen auf einer durchlässigen Unterlage durch Absaugen oder Abpressen eine Platte zu bilden, die in Folgeschritten weiter verdichtet und mit Imprägnier- und Bindemitteln versehen werden kann.

Gemäß der DE 10 2006 013 657 werden Faserbündel in Fein- und Elementarfasern durch den Einsatz speziell gezüchteter und an extreme pH-Werte adaptierter Bakterien erhalten. Hier ist der Aufschlussprozess in Reaktoren mit pH-Steuerung unter aeroben Bedingungen, welche durch einen Wechsel zwischen einer feuchten und einer submersen Phase erreicht wird, durchzuführen. Bastfasern lassen sich gemäß der DE 11 2005 001 792 durch Behandeln mit wässrigen alkalischen Lösungen bei erhöhter Temperatur aufschließen. Dieser Aufschluss hat in einem Druckbehälter bei Temperaturen im Bereich von 80 bis 180°C in Gegenwart einer wässrigen oder wässrig-alkoholischen Lösung, enthaltend Ammoniak oder ein Amin, durchgeführt zu werden.

Die WO 2008/107664 A1 offenbart eine Fasermatte aus faserigem Pflanzenmaterial und einem weiteren pflanzenbasierten Material, das in dem aus dem faserigen Pflanzenmaterial gebildeten Netzwerk eingebettet vorliegt. Für das weitere pflanzenbasierte Material nennt die WO 2008/107664 A1 Haferstroh, Roggenstroh, Gerstenstroh, Reisstroh, Zellulose, Papier, Pappe und Kokosnusshülsen, für das faserige Pflanzenmaterial Hanf-, Flachs-, Ramie-, Kenaf-, Rattan-, Sojabohnen-, Okra-, Weinreben-, Torf-, Kapok- und Bananenfasern. Die mit den genannten Materialien erhaltenen Fasermatten sollen auch ohne den Einsatz synthetischer Bindemittel oder Kunststofffasern hinreichend steif sein.

Die WO 2008/107664 A1 offenbart die folgenden Merkmale des Anspruchs 1:
Verfahren zum zerkleinernden Aufbereiten von nachwachsenden Rohstoffen in Form von Bastpflanzenmaterial für die Weiterverarbeitung, insbesondere zu Faservliesmatten, umfassend die Schritte:
   a) Zurverfügungstellung von geernteten nachwachsenden Rohstoffen in Form von Bastpflanzen,
   b) Zuführen dieser nachwachsenden Rohstoffe in Form von Bastpflanzen zu einer Vorzerkleinerungsvorrichtung,
   c) Vorzerkleinern der nachwachsenden Rohstoffe in Form von Bastpflanzen in der Vorzerkleinerungsvorrichtung,
   d) Zuführen der vorzerkleinerten nachwachsenden Rohstoffe in Form von Bastpflanzen zu einer Zerkleinerungsvorrichtung,
   e) Zerkleinern der vorzerkleinerten nachwachsenden Rohstoffe in Form von Bastpflanzen in der Zerkleinerungsvorrichtung, und
   f) Auffangen des zerkleinerten Pflanzenmaterials,
wobei die nachwachsenden Rohstoffe in Form von Bastpflanzen einem Rösteprozess vor der Vorzerkleinerung unterzogen werden, wobei die der Vorzerkleinerung zugeführten nachwachsenden Rohstoffe in Form von Bastpflanzen, das der Zerkleinerung zugeführte Pflanzenmaterial und das dem Auffangen gemäß Schritt f) zugeführte Pflanzenmaterial Schäben aufweist und wobei der Vorzerkleinerungsschritt c) und/oder der Zerkleinerungsschritt e) in der Weise durchgeführt werden, dass im aufgefangenen zerkleinerten Pflanzenmaterial Pflanzenfasern und -schäben zumindest in Teilen miteinander verbunden vorliegen. Die EP 1 932 643 A2 betrifft ein Verfahren zur Herstellung eines verleimbaren Werkstoffes für die Plattenindustrie aus Faserpflanzen, insbesondere Hanf oder Flachs oder eine Mischung derselben. Dieses Verfahren umfasst die Schritte des Kürzens der Faserpflanzen auf eine Länge von 2 bis 30 cm, des Aufarbeitens der Faserpflanzen, um Fasern und holzige Anteile teilweise voneinander zu lösen, und des Trocknens der Faserpflanzen, so dass der gebildete Werkstoff Stängelstücke umfasst, welche Fasern und holzige Anteile der Faserpflanzen enthalten, wobei Fasern und holzige Anteile im Wesentlichen in ihrem natürlichen Verbund bleiben. Mit dem in der EP 1 932 643 A2 beschriebenen Verfahren sollen Werkstoffe zugänglich sein, welche auf kostengünstige Art und Weise eigenstabile Werkstoffplatten liefern, und zwar ohne zugleich synthetische Binde- oder Stützfasern mit verarbeiten zu müssen.

In der US 4,528,037 A wird ein Verfahren zur Herstellung stabilisierter Teilchen aus Lignocellulosematerial beschrieben, umfassend das mechanische Zerkleinern von Lignocellulosematerial, das Wärmebehandeln der dabei erhaltenen Teilchen bei Temperaturen, die von etwa 800 °C ausgehen und sodann auf etwa 75 °C reduziert werden, und das Besprühen der thermisch behandelten Teilchen mit einer Calciumsalzlösung, gefolgt von dem Besprühen mit einer Alkalimetallsilikatlösung, wobei Calciumsilikat gebildet wird. Das Verfahren gemäß der US 4,528,037 A soll Lignocelluloseteilchen hinreichend beständig machen, um sie in zementöse Baumaterialien einbringen zu können.

Gemäß der WO 00/14312 soll die Aufbereitung von Faserpflanzenmaterialien dadurch gelingen, dass man diese zunächst zerpresst und dann in Abschnitte gewünschter Länge zerschneidet. Anschließend werden die zerschnittenen Fasermaterialien und Schäben voneinander separiert.

Die aus dem Stand der Technik bekannten Verfahren zur Isolierung von Pflanzenfasern sind jedoch in der Regel energetisch sehr aufwendig und daher kostentreibend. Aus diesem Grunde hat es nicht an Versuchen gefehlt, Pflanzenmaterial enthaltend Fasern und Schäben für die Herstellung von Dämmfasermatten zu verwenden. Exemplarisch sei ebenfalls auf die DE 197 56 046 verwiesen, gemäß der frisch geerntete Hanfpflanzen durch ein Silieren aufzuschließen und durch anschließende Schub- und Scherbeanspruchung zu zerfasern sind. Die derart aufbereiteten Hanffasermaterialien sollen sich mit den darin verbliebenen Schäben unter Einsatz geeigneter Bindemittel zu Dämmplatten verarbeiten lassen. Gemäß der AT 409 974 sind die gemäß der DE 197 56 046 erhaltenen Produkte jedoch nur bedingt als Wärmedämmplatten einsetzbar. Daher schlägt die AT 409 974 vor, zunächst Fasern und Schäben zu trennen, um anschließend die abgetrennten Hanfschäben gezielt einem Fasergemisch aus Naturfasern und Bindefasern zuzugeben. Eine derartige Vorgehensweise löst das Problem der energie- und kostenintensiven Fertigung von Dämmplatten aus nachwachsenden Rohstoffen nicht.

Es wäre folglich wünschenswert, auf energetisch günstige Weise zu Dämmstoffmatten aus nachwachsenden Rohstoffen zu gelangen, welche eine hohe Dämmwirkung aufweisen.

Der vorliegenden Erfindung lag daher die Aufgabe zu Grunde, ein Verfahren zur Verfügung zu stellen, mit dem auf einfache und energiesparende Weise Ausgangsmaterialien für die Herstellung von Faservliesmatten aus nachwachsenden Rohstoffen erhalten werden können. Der vorliegenden Erfindung lag die Aufgabe zu Grunde, nachwachsende Rohstoffe in Form von Bastpflanzen in einer Weise aufschließen zu können, dass ohne den Anteil an Schäben signifikant reduzieren zu müssen bzw. einen Schäbenabtrennschritt vorsehen zu müssen, zerkleinertes Pflanzenmaterial erhalten wird, das als solches für die Herstellung von Faservliesmatten, insbesondere Dämmstoffmatten, geeignet ist und als solches verwendet werden kann.

Demgemäß wurde ein Verfahren zum zerkleinernden Aufbereiten von nachwachsenden Rohstoffen in Form von Bastpflanzenmaterial für die Weiterverarbeitung, insbesondere zu Faservliesmatten, gemäß den Merkmalen des Patentanspruchs 1 gefunden. Das erfindungsgemäße Zerkleinerungsverfahren zeichnet sich dadurch aus, dass Verfahrensschritte umfassend eine Nassaufbereitung entfallen können. Die für das erfindungsgemäße Verfahren zum Einsatz kommenden nachwachsenden Rohstoffen sind in einer bevorzugten Ausgestaltung somit allenfalls während der Tauröste und/oder, sofern überhaupt erforderlich, beim Besprühen mit einem wässrigen System enthaltend mindestens ein Flammschutzmittel einer minimalen Menge an Feuchtigkeit ausgesetzt.

Mit dem erfindungsgemäßen Verfahren können zum Beispiel solche nachwachsenden Rohstoffen in gewünschter Weise zerkleinert werden, um für die energetisch günstige Weiterverarbeitung von zum Beispiel Dämmstoffplatten verwendet werden zu können, die ausgewählt sind aus der Gruppe bestehend aus Hanf, Flachs, Jute, Sisal, Raps, Kokos, Kenaf, Rohrkolben, Nessel, Getreide, Ramie, Miscanthus, Getreidestroh und Schilf oder beliebigen Mischungen hiervon. Besonders bevorzugt werden mit dem erfindungsgemäßen Verfahren solche nachwachsenden Rohstoffe verkleinert, die bei der Zerkleinerung Schäben bilden. Derartige nachwachsende Rohstoffe umfassen zum Beispiel, insbesondere Hanf, Jute, Nessel, Flachs, Kenaf, Ramie oder Miscanthus oder beliebigen Mischungen hiervon. Als Schäben bezeichnet man im Allgemeinen verholzte Stängelteile, die bei der Aufbereitung von z.B. Bastpflanzen anfallen.

Das erfindungsgemäße Verfahren eignet sich insbesondere auch für die Aufbereitung von Hanfpflanzen.

Für das erfindungsgemäße Aufbereitungsverfahren wird insbesondere auf solche nachwachsenden Rohstoffe in Form von Bastpflanzen, zurückgegriffen, die einem Rösteprozess, insbesondere einer Feldröste, vor der Vorzerkleinerung unterzogen worden sind.

Hierbei hat sich als vorteilhaft erwiesen, solche geernteten nachwachsenden Rohstoffe in Form von Bastpflanzen, besonders bevorzugt Hanf, einzusetzen, die einen Röstgrad im Bereich von 1 bis 9, insbesondere im Bereich von 1 bis 6 oder 2 bis 6 aufweisen. Der Bestimmung des Röstgrads liegt dabei die folgende Skala zugrunde: 1 = nicht geröstet und 9 = Röste abgeschlossen, mit 1 - 3 = olivgrün bis hellgrün, 4 - 6 = hellblond bis beige mit einsetzender Verpilzung, 7 - 9 = ockerbraun bis dunkelbraun mit zunehmender Verpilzung. Diese Röstgradeinteilung geht zurück auf die IfPP (Informationen für die Pflanzenproduktion) Heft 7/1998, Untersuchungen zu pflanzenbaulichen, erntetechnischen und ökonomischen Fragen des Anbaus von Faser- und Körnerhanf", Landesanstalt für Pflanzenbau Forchheim, ISSN 0937 - 6712, 7/1998.

Wenngleich nicht zwingend erforderlich, kann es in manchen Fällen von Vorteil sein, die nachwachsenden Rohstoffe in Form von Bastpflanzen, mit einem Pflanzenaufschließer, insbesondere Bastpflanzenaufschließer, beispielsweise Hanfaufschließer, grob vorzuzerkleinern. Dieses geschieht regelmäßig bereits auf dem Feld. Dieses Vorgehen empfiehlt sich insbesondere bei niederen Röstgraden, beispielsweise im Bereich von 1 bis 3.

Die für das erfindungsgemäße Verfahren zur Verfügung gestellten nachwachsenden Rohstoffe in Form von Bastpflanzen, werden im Allgemeinen in der Weise geerntet, dass sie frei sind von Wurzelanteilen. Beispielsweise werden hierfür die Pflanzenstängel etwa 10 bis 20 Zentimeter oberhalb des Ackerbodens abgeschnitten. Des Weiteren sind solche nachwachsenden Rohstoffe in Form von Bastpflanzen, für das erfindungsgemäße Aufbereitungsverfahren besonders geeignet, bei denen ebenfalls Samen und/oder Früchte bzw. diejenigen Pflanzenteile enthaltend Samen und/oder Früchte vor der Zurverfügungstellung für das erfindungsgemäße Verfahren entfernt worden sind. Zwar sind die geernteten und gegebenenfalls einem Rösteprozess unterworfenen Pflanzenmaterialien als solche für das erfindungsgemäße Aufbereitungsverfahren eingesetzt worden, allerdings ist es häufig zweckmäßig, die geernteten nachwachsenden Rohstoffe in Form von Bastpflanzen, zu Ballen, insbesondere zu Rund- oder Quaderballen, zu pressen. Hierbei ist vorzugsweise dafür Sorge zu tragen, dass das zu verpressende Material in einem trockenen Zustand vorliegt.

In dem Vorzerkleinerungsschritt kommen vorzugsweise eine Rotorschere oder ein Rotorreißer zum Einsatz. Besonders geeignete Längen an vorzerkleinerten Pflanzenmaterialien, insbesondere Fasern/oder Schäben, vorzugsweise Fasern und Schäben, erhält man dadurch, dass die Breite der Schneidscheiben der Rotorschere oder des Rotorreißers im Bereich von 4 cm bis 15 cm, vorzugsweise im Bereich von 5 bis 12 cm und besonders bevorzugt im Bereich von 7 bis 10 cm liegt und/oder dass der Durchmesser der Schneidscheiben im Bereich von 300 mm bis 900 mm, vorzugsweise im Bereich von 400 mm bis 800 mm und besonders bevorzugt im Bereich von 600 mm bis 700 mm liegt. Die Rotorschere oder der Rotorreißer weisen regelmäßig zwei, insbesondere gegenläufig arbeitende, Schneidwellen auf. Geeignete Rotorscheren bzw. Rotorreißer sind dem Fachmann z.B. aus der WO2013/ 167497 bekannt.

Die Vorzerkleinerung kann dadurch nochmals intensiviert und beschleunigt werden, dass die nachwachsenden Rohstoffe in Form von Bastpflanzen, der Vorzerkleinerungsvorrichtung mit mindestens einer, insbesondere hydraulisch arbeitenden, Nachdrückvorrichtung zugeführt werden.

Es hat sich als sehr zweckmäßig erwiesen, nach dem Vorzerkleinerungsschritt die vorzerkleinerten nachwachsenden Rohstoffe in Form von Bastpflanzen, insbesondere während des Zuführens zu der Zerkleinerungsvorrichtung, mindestens teilweise von Fremdkörpern, insbesondere Steinen, Erdreich oder Metallteilen, zu befreien. Dies kann z.B. über ein Förderband geschehen, das die vorzerkleinerten Pflanzenteile zu einer Absaugleitung führt. Demgemäß sieht das erfindungsgemäße Verfahrens vor, dass das Zuführen der vorzerkleinerten nachwachsenden Rohstoffe in Form von
Bastpflanzen zu der Zerkleinerungsvorrichtung das Ansaugen dieser vorzerkleinerten nachwachsenden Rohstoffe in Form von Bastpflanzen über eine Absaugleitung umfasst. Mit dieser Absaugleitung werden die vorzerkleinerten Pflanzenteile zu der Zerkleinerungsvorrichtung transferiert, während schwerere Bestandteile wie Steine, Erdklumpen oder unzerteilte Faseragglomerate auf der Transportvorrichtung, beispielsweise einem Förderband, verbleiben und z.B. am Ende des Förderbandes, das über den Bereich der Absaugleitung hinausgehen kann, schwerkraftgetrieben ausgesondert werden.

Eine weitere Aufreinigung des vor zerkleinerte Pflanzenmaterials schließt sich an die Abtrennung von schweren Fremdkörpern, wie vorangehenden beschrieben an, kann aber auch ohne eine vorangehende Abtrennung von schweren Fremdkörpern vorgenommen werden. Demgemäß sieht das erfindungsgemäße Verfahren vor, dass die angesaugten vorzerkleinerten nachwachsenden Rohstoffe in Form von Bastpflanzen mindestens teilweise, insbesondere mittels mindestens eines Zyklonabscheiders und/oder Kondensers, von der Förderluft und Staubteilchen befreit werden. Zyklonabscheider bzw. Kondenser sind dem Fachmann bekannt. Geeignete Kondenser sind z.B. Zellradkondenser. Geeignete Zyklonabscheider finden sich u.a. in der DE 30 23 069, DE 28 38 173 und DE 164 88 60 beschrieben.

Im Anschluss an die Vorzerkleinerung bzw. die sich anschließenden Aufreinigungsschritte wie das Abtrennen von Fremdkörpern und/oder die Staubabsonderung, findet der Zerkleinerungsschritt mit mindestens einem Zerkleinerungswerkzeug statt. Besonders bevorzugt wird hierfür auf einen Guillotinenschneider zurückgegriffen. Gemäß einer besonders zweckmäßigen Ausführungsform ist vorgesehen, dass der Guillotinenschneider mindestens ein im Wesentlichen quer zur Förderrichtung des Stroms an vorzerkleinerten nachwachsenden Rohstoffen, insbesondere Bastpflanzen, insbesondere linear, bewegbares oder bewegtes Schneidmesser umfasst bzw. einsetzt. Auf diese Weise gelingt es besonders gut, die Pflanzenfasern und Schäben auf eine vorbestimmte durchschnittliche Länge zu bringen, ohne eine besonders große Streubreite der erhaltenen Längen in Kauf nehmen zu müssen. Demgemäß gelingt es mit dem erfindungsgemäßen Verfahren in einer besonders vorteilhaften Ausgestaltung, dass die Vorzerkleinerung gemäß Schritt c) und die Zerkleinerung gemäß Schritt e) in einer Weise vorgenommen werden, dass nach Schritt e) hauptsächlich, insbesondere im Bereich von 70 bis 99 Gew. -% und besonders bevorzugt im Bereich von 80 bis 99 Gew. -%, jeweils bezogen auf das Gesamtgewicht des aufgefangenen zerkleinerten Pflanzenmaterials, enthaltend Pflanzenfasern und/oder Schäben, insbesondere enthaltend Pflanzenfasern und Schäben, mit einer durchschnittlichen Länge, insbesondere absoluten Länge, im Bereich von 2 bis 15 cm, insbesondere im Bereich von 3 bis 12 cm und besonders bevorzugt im Bereich von 4 bis 10 cm, zu erhalten. Mit dem erfindungsgemäßen Verfahren lassen sich folglich Faser- und Schäbenlängen erhalten, die verfahrenstechnisch auch auf herkömmlichen Anlagen zur Herstellung von Faservliesen ohne weiteres verarbeitet werden können, ohne Gefahr zu laufen, dass es zu Verstopfungen von Anlagenteilen oder zum Ausfall von insbesondere rotierenden Bauteilen kommt, beispielsweise weil sich überlange Fasern oder Schäben vollständig um das rotierende Bauteil gewickelt haben und/oder weil sich Schäben nicht mehr von dem Vliesbildner lösen.

Das Auffangen der zerkleinerten nachwachsenden Rohstoffe in Form von Bastpflanzen, nach dem Zerkleinerungsschritt gelingt regelmäßig sehr wirksam über das Ansaugen derselben über eine Absaugleitung. Auch nach dem Zerkleinerungsschritt hat es sich zwecks Erhalts eines optimal aufbereiteten zerkleinerten Fasermaterials, insbesondere enthaltend Pflanzenfasern und Schäben, als sehr zielführend erwiesen, insbesondere vor dem Auffangen oder während des Auffangens der zerkleinerten nachwachsenden Rohstoffe in Form von Bastpflanzen, über die Absaugleitung, Fremdkörper, insbesondere Steine, Erdreich und/oder Metallteile, insbesondere schwerkraftgetrieben, aus diesem zerkleinerten Pflanzenmaterial abzuscheiden.

Mit dieser Absaugleitung können die zerkleinerten Pflanzenteile z.B. einem Auffangbehältnis oder einer Auffangstelle zugeführt werden, während schwerere Bestandteile wie Steine, Erdklumpen oder nur mäßig zerteilte Faseragglomerate auf der Transportvorrichtung, beispielsweise einem Förderband, verbleiben und z.B. am Ende des Förderbandes, das über den Bereich der Absaugleitung hinausgehen kann, schwerkraftgetrieben ausgesondert werden.

In die Absaugleitung oder vor- oder nachgeschaltet zu dieser ist eine weitere Vorrichtung zur zumindest teilweisen Abtrennung von Staub und Förderluft von den zerkleinerten nachwachsenden Rohstoffe in Form von Bastpflanzen, vorgesehen. Bei dieser Vorrichtung kann es sich zum Beispiel um einen Zyklonabscheider und/oder Kondenser handeln.

Das aufgefangene, gemäß dem erfindungsgemäßen Verfahren hergestellte zerkleinerte Bastpflanzenmaterial, kann als solches bereits für die Herstellung von Faservliesmatten eingesetzt werden. Allerdings ist es ebenfalls möglich, dass das Auffangen des zerkleinerten Bastpflanzenmaterials das Pressen zu Ballen oder die Lagerung in einem Vorratsbehälter umfasst.

Ganz besonders für die Weiterverarbeitung zu zum Beispiel Faservliesmatten geeignete zerkleinerte nachwachsende Rohstoffe in Form von zerkleinerte Bastpflanzen, insbesondere enthaltend Fasern und Schäben, erhält man dadurch, dass die Stängel der geernteten nachwachsenden Rohstoffe in Form von Bastpflanzen, eine durchschnittliche Dicke, vorzugsweise maximale Dicke, bis 6 cm, vorzugsweise bis 5 cm, besonders bevorzugt bis 4,5 cm und insbesondere bevorzugt im Bereich von 0,2 cm bis 3,5 cm aufweisen. In einer zweckmäßigen Ausgestaltung sollten die Stängel einen durchschnittlichen, insbesondere absoluten, Durchmesser von nicht mehr als 5 cm aufweisen.

Gemäß einem besonders bevorzugten Ausgestaltung des erfindungsgemäßen Verfahrens ist vorgesehen, dass die der Vorzerkleinerung zugeführten nachwachsenden Rohstoffe in Form von Bastpflanzen, das der Zerkleinerung zugeführte Pflanzenmaterial und das dem Auffangen gemäß Schritt f) zugeführte Pflanzenmaterial Schäben, insbesondere Hanfschäben, aufweisen. Das erfindungsgemäße Verfahren eignet sich somit für die Aufbereitung von Bastpflanzenmaterialien, welche bei Zerkleinerung nicht nur Bastpflanzenfasern, sondern auch Schäben liefern. Mit dem erfindungsgemäßen Verfahren gelingt es folglich nicht nur, Schäben mit einer sehr kurzen Länge zuverlässig und wiederholbar zu erhalten, sondern darüber hinaus auch sicherzustellen, dass die Schäben zumindest teilweise noch mit den Pflanzenfasern verbunden vorliegen. Dieses führt bei der Herstellung von Faservliesstoffen zu Produkten mit einer sehr ausgeprägten Festigkeit, ohne dass jedoch der Herstellprozess durch die Anwesenheit von Schäben gestört wird. Demgemäß gestattet es das erfindungsgemäße Verfahren dass der Vorzerkleinerungsschritt c) und/oder der Zerkleinerungsschritt e) in der Weise durchgeführt werden, dass im aufgefangenen zerkleinerten Pflanzenmaterial Pflanzenfasern und -schäben zumindest in Teilen miteinander verbunden vorliegen.

Mit dem erfindungsgemäßen Verfahren kann zudem sichergestellt werden, dass die Schäben zum überwiegenden Teil, insbesondere im Wesentlichen vollständig, bei dem vorzerkleinerten und dem zerkleinerten Material verbleiben.

Die der Erfindung zu Grunde liegende Aufgabe wird des Weiteren gelöst durch zerkleinerte nachwachsende Rohstoffe in Form von Bastpflanzenmaterial, vorzugsweise Hanfpflanzenmaterial, enthaltend Pflanzenfasern und Schäben, insbesondere Hanffasern und Hanfschäben, erhältlich gemäß dem erfindungsgemäßen Verfahren.

Der vorliegenden Erfindung lag die überraschende Erkenntnis zu Grunde, dass sich selbst Bastpflanzen wie Hanf insbesondere durch die geeignete Wahl einer Kombination an Zerkleinerungsvorrichtungen sowie vorzugsweise auch durch die Obacht bei der Auswahl geeigneter Stängeldicken zerkleinertes Material erhältlich ist enthaltend zerkleinerte Pflanzenfasern und zerkleinerte Pflanzensehäben, wobei die Schäben zumindest in Teilen noch stets mit den Fasern verbunden sind. Erfindungsweise sind im Wesentlichen sämtliche Schäben noch mit Fasern verbunden. Das nach dem erfindungsgemäßen Verfahren erhältliche zerkleinerte Bastpflanzenmaterial ist sehr gut geeignet, um auf herkömmlichen Maschinen für die Herstellung von Faservliesmatten, beispielsweise Dämmstoffmatten verwendet zu werden. Es kommt nicht zu den bislang beobachteten Beschädigungen oder Beeinträchtigungen von Maschinenteilen auf Grund der Anwesenheit von Schäben bzw. von Schäben, die noch stets mit Fasern verbunden sind. Als besonderer Vorteil hat sich auch erwiesen, dass sich mit dem erfindungsgemäßen Verfahren die Länge der Pflanzenfasern und Schäben einstellen lässt, wobei regelmäßig die Streubreite der erhaltenen Längen gering ist.

## Patentansprüche

1. Verfahren zum zerkleinernden Aufbereiten von nachwachsenden Rohstoffen in Form von Bastpflanzenmaterial
für die Weiterverarbeitung,
insbesondere zu Faservliesmatten, umfassend die Schritte
a) Zurverfügungstellung von geernteten nachwachsenden Rohstoffen in Form von Bastpflanzen,
b) Zuführen dieser nachwachsenden Rohstoffe in Form von Bastpflanzen zu einer Vorzerkleinerungsvorrichtung,
insbesondere umfassend mindestens eine Rotorschere und/oder mindestens einen Rotorreißer,
c) Vorzerkleinern der nachwachsenden Rohstoffe in Form von Bastpflanzen in der Vorzerkleinerungsvorrichtung,
d) Zuführen der vorzerkleinerten nachwachsenden Rohstoffe in Form von Bastpflanzen zu einer Zerkleinerungsvorrichtung,
insbesondere umfassend mindestens einen Rotationsschneider und/oder mindestens einen Guillotinenschneider,
wobei das Zuführen der vorzerkleinerten nachwachsenden Rohstoffe in Form von Bastpflanzen zu der Zerkleinerungsvorrichtung das Ansaugen dieser vorzerkleinerten nachwachsenden Rohstoffe über eine Absaugleitung umfasst, wobei die angesaugten vorzerkleinerten nachwachsenden Rohstoffe in Form von Bastpflanzen mindestens teilweise von der Förderluft und Staubteilchen befreit werden, und
wobei nach Schritt c) während des Zuführens zu der Zerkleinerungsvorrichtung Fremdkörper schwerkraftgetrieben aus diesem zerkleinerten Pflanzenmaterial abgeschieden werden,
e) Zerkleinern der vorzerkleinerten nachwachsenden Rohstoffe in Form von Bastpflanzen in der Zerkleinerungsvorrichtung, und
f) Auffangen des zerkleinerten Pflanzenmaterials,
wobei die nachwachsenden Rohstoffe in Form von Bastpflanzen einem Rösteprozess vor der Vorzerkleinerung unterzogen werden,
wobei die der Vorzerkleinerung zugeführten nachwachsenden Rohstoffe in Form von Bastpflanzen, das der Zerkleinerung zugeführte Pflanzenmaterial und das dem Auffangen gemäß Schritt f) zugeführte Pflanzenmaterial Schäben aufweist und wobei der Vorzerkleinerungsschritt c) und/oder der Zerkleinerungsschritt e) in der Weise durchgeführt werden, dass im aufgefangenen zerkleinerten Pflanzenmaterial Pflanzenfasern und -schäben zumindest in Teilen miteinander verbunden vorliegen.

2. Verfahren nach Anspruch 1, **dadurch gekennzeichnet, dass**
die nachwachsenden Rohstoffe ausgewählt sind aus der Gruppe bestehend aus Hanf, Flachs, Jute, Sisal, Raps, Kokos, Kenaf, Nessel, Ramie, Miscanthus, und Schilf oder beliebigen Mischungen hiervon,
insbesondere ausgewählt aus der Gruppe bestehend aus Hanf, Jute, Nessel, Flachs, Kenaf, Ramie und Miscanthus oder beliebigen Mischungen hiervon.

3. Verfahren nach Anspruch 1 oder 2, **dadurch gekennzeichnet, dass**
die nachwachsenden Rohstoffe in Form von Bastpflanzen einer Feldröste vor der Vorzerkleinerung unterzogen wurden.

4. Verfahren nach einem der vorangehenden Ansprüche, **dadurch gekennzeichnet, dass** die geernteten nachwachsenden Rohstoffe in Form von Bastpflanzen im Wesentlichen frei sind von Wurzelanteilen und/oder frei sind von Pflanzenteilen enthaltend Samen und/oder Früchte.

5. Verfahren nach einem der vorangehenden Ansprüche, **dadurch gekennzeichnet, dass** die Breite der Schneidscheiben der Rotorschere oder des Rotorreißers im Bereich von 4 cm bis 15 cm, vorzugsweise im Bereich von 5 bis 12 cm oder im Bereich von 7 bis 10 cm liegt, und/oder dass
der Durchmesser der Schneidscheiben im Bereich von 300 mm bis 900 mm, vorzugsweise im Bereich von 400 mm bis 800 mm oder im Bereich von 600 mm bis 700 mm liegt, und/oder dass
die Rotorschere oder der Rotorreißer zwei, insbesondere gegenläufig arbeitende, Schneidwellen umfasst.

6. Verfahren nach einem der vorangehenden Ansprüche, **dadurch gekennzeichnet, dass** der Guillotinenschneider mindestens ein im Wesentlichen quer zur Förderrichtung des Stroms an vorzerkleinerten nachwachsenden Rohstoffen, insbesondere Bastpflanzen, insbesondere linear, bewegbares oder bewegtes Schneidmesser umfasst bzw. einsetzt.

7. Verfahren nach einem der vorangehenden Ansprüche, **dadurch gekennzeichnet, dass** das Auffangen der zerkleinerten nachwachsenden Rohstoffe das Ansaugen derselben nach Verfahrensschritt e) über eine Absaugleitung umfasst.

8. Verfahren nach einem der vorangehenden Ansprüche, **dadurch gekennzeichnet, dass** die angesaugten vorzerkleinerten nachwachsenden Rohstoffe in Form von Bastpflanzen mindestens teilweise mittels mindestens eines Zyklonabscheiders und/oder Kondensers von der Förderluft und Staubteilchen befreit werden und/oder dass die zerkleinerten nachwachsenden Rohstoffe in Form von Bastpflanzen zumindest teilweise, insbesondere mit Hilfe mindestens eines Zyklonabscheiders und/oder Kondensers, von der Förderluft und Staubteilchen befreit wird.

9. Verfahren nach einem der vorangehenden Ansprüche, **dadurch gekennzeichnet, dass** die Vorzerkleinerung gemäß Schritt c) und die Zerkleinerung gemäß Schritt e) in einer Weise vorgenommen werden, dass nach Schritt e) hauptsächlich, insbesondere im Bereich von 70 bis 99 Gew. -% oder im Bereich von 80 bis 99 Gew. -%, jeweils bezogen auf das Gesamtgewicht des aufgefangenen zerkleinerten Pflanzenmaterials, Pflanzenfasern und/oder Schäben, insbesondere Pflanzenfasern und Schäben, mit einer durchschnittlichen Länge, insbesondere absoluten Länge, im Bereich von 2 bis 15 cm, insbesondere im Bereich von 3 bis 12 cm oder im Bereich von 4 bis 10 cm, erhalten werden.

10. Verfahren nach einem der vorangehenden Ansprüche, **dadurch gekennzeichnet, dass** nach Schritt c) während des Zuführens zu der Zerkleinerungsvorrichtung und nach Schritt e), insbesondere vor dem Auffangen der zerkleinerten nachwachsenden Rohstoffe in Form von Bastpflanzen, Fremdkörper, insbesondere Steine, Erdreich und/oder Metallteile, schwerkraftgetrieben aus diesem zerkleinerten Pflanzenmaterial abgeschieden werden.

11. Verfahren nach einem der vorangehenden Ansprüche, **dadurch gekennzeichnet, dass** die Stängel der geernteten nachwachsenden Rohstoffe in Form von Bastpflanzen eine durchschnittliche Dicke, vorzugsweise maximale Dicke, bis 6 cm, vorzugsweise bis 5 cm oder bis 4,5 cm oder im Bereich von 0,2 cm bis 3,5 cm, aufweisen.

12. Verfahren nach einem der vorangehenden Ansprüche, **dadurch gekennzeichnet, dass** die der Vorzerkleinerung zugeführten nachwachsenden Rohstoffe in Form von Bastpflanzen, das der Zerkleinerung zugeführte Pflanzenmaterial und das dem Auffangen gemäß Schritt f) zugeführte Pflanzenmaterial Hanfschäben aufweist.

13. Verfahren nach einem der vorangehenden Ansprüche, **dadurch gekennzeichnet, dass** die Schäben zum überwiegenden Teil, insbesondere im Wesentlichen vollständig, bei dem vorzerkleinerten und dem zerkleinerten Material verbleiben.

## Claims

1. A method for comminuting renewable raw materials in the form of bast plant material, for further processing, in particular to form fibrous fleece mats, comprising the steps
a) providing harvested renewable raw materials in the form of bast plants,
b) supplying said renewable raw materials in the form of bast plants to a pre-comminuting device, in particular comprising at least one rotary cutter and/or at least one rotary shredder,
c) pre-comminuting the renewable raw materials in the form of bast plants in the pre-comminuting device,
d) supplying the pre-comminuted renewable raw materials in the form of bast plants to a comminuting device, in particular comprising at least rotary cutter and/or at least one guillotine cutter, wherein supplying pre-comminuted renewable raw materials in the form of bast plants to the comminuting device comprises suctioning said pre-comminuted renewable raw materials through a suction line, wherein the suctioned pre-comminuted renewable raw materials in the form of bast plants are freed at least partly of conveying air and dust particles, and
wherein after step c) when supplying to the comminuting device foreign particles are separated by gravity from said comminuted plant material,
e) comminuting the pre-comminuted renewable raw materials in the form of bast plants in the comminuting device, and
f) collecting the comminuted plant material, wherein the renewable raw materials in the form of bast plants are subjected to field retting prior to pre-comminuting,
wherein the renewable raw materials in the form of bast plants supplied for pre-comminuting, the plant material supplied for comminuting and the plant material supplied for collecting according to step f) includes shives and
wherein the pre-comminuting step c) and/or comminuting step e) are performed such that in the collected comminuted plant material plant fibres and shives are joined together at least in part.

2. The method according to Claim 1, **characterised in that**
the renewable raw materials are selected from a group comprising hemp, flax, jute, sisal, rape, coconut, kenaf, nettle, ramie, miscanthus and reed or any mixtures thereof, in particular selected from a group comprising hemp, jute, nettle, flax, kenaf, ramie and miscanthus or any mixtures thereof.

3. The method according to Claim 1 or 2, **characterised in that**
the renewable raw materials in the form of bast plants are subjected to field retting prior to pre-comminuting.

4. The method according to any of the preceding claims, **characterised in that** the harvested renewable raw materials in the form of bast plants are substantially free of root pieces and/or free of plant pieces containing seeds and/or fruit.

5. The method according to any of the preceding claims, **characterised in that** the width of the cutting discs of the rotary cutter or the rotary shredder is in the range of 4 cm to 15 cm, preferably in the range of 5 to 12 cm or in the range of 7 to 10 cm, and/or **in that** the diameter of the cutting discs is in the range of 300 mm to 900 mm, preferably in the range of 400 mm to 800 mm or in the range of 600 mm to 700 mm, and/or **in that** the rotary cutter or the rotary shredder comprises two, in particular counter-rotating, cutting shafts.

6. The method according to any of the preceding claims, **characterised in that** the guillotine cutter comprises or uses a cutting blade which can be moved or is moved, in particular linearly, at least substantially transversely to the conveying direction of the flow of pre-comminuted renewable raw materials, in particular bast plants.

7. The method according to any of the preceding claims, **characterised in that** collecting the comminuted renewable raw materials comprises suctioning the latter through a suction line after method step e).

8. The method according to any of the preceding claims, **characterised in that** the suctioned pre-comminuted renewable raw materials in the form of bast plants is freed at least partly by means of at least one cyclone separator and/or condenser of conveying air and dust particles and/or **in that** the comminuted renewable raw materials in the form of bast plants are freed at least partly, in particular by means of at least one cyclone separator and/or condenser, of conveying air and dust particles.

9. The method according to any of the preceding claims, **characterised in that** the pre-comminuting according to step c) and the comminuting according to step e) are performed in such a way that after step e) plant fibres and shives, in particular plant fibres and shives with an average length, in particular an absolute length, in the range of 2 to 15 cm, in particular in the range of 3 to 12 cm or in the range of 4 to 10 cm, are obtained mainly, in particular in the range of 70 to 99 wt.% or in the range of 80 to 99 wt.%, relative to the total weight of the collected reduced plant material.

10. The method according to any of the preceding claims, **characterised in that** after step c) during the supply to the comminuting device and after step e), in particular before collecting the comminuted renewable raw materials in the form of bast plants, foreign particles, in particular stones, soil and/or metal parts are separated by gravity from said comminuted plant material.

11. The method according to any of the preceding claims, **characterised in that** the stems of the harvested renewable raw materials in the form of bast plants have an average thickness, preferably a maximum thickness, of up to 6 cm, preferably up to 5 cm or 4.5 cm or in the range of 0.2 cm to 3.5 cm.

12. The method according to any of the preceding claims, **characterised in that** the renewable raw materials in the form of bast plants supplied for pre-comminuting, the plant material supplied for comminuting and the plant material supplied for collection accoding to step f) comprises hemp shives.

13. The method according to any of the preceding claims, **characterised in that** the shives remain mostly, in particular substantially completely, in the pre-comminuted and the comminuted material.

## Revendications

1. Procédé de préparation de broyage de matières premières renouvelables sous forme de matériau de plantes libériennes
pour la transformation,
en particulier en nattes en tissu fibreux, comprenant les étapes consistant à
a) mettre à disposition les matières premières renouvelables sous forme de plantes libériennes récoltées ;
b) amener ces matières premières renouvelables sous forme de plantes libériennes à un dispositif de prébroyage,
qui comprend en particulier et au moins une cisaille à rotors et/ou
au moins une déchiqueteuse à rotors ;
c) prébroyer les matières premières renouvelables sous forme de plantes libériennes dans le dispositif de prébroyage ;
d) amener les matières premières renouvelables sous forme de plantes libériennes prébroyées à un dispositif de broyage,
qui comprend en particulier et au moins une machine de coupe rotative et/ou au moins une cisaille guillotine,
l'amenée des matières premières renouvelables sous forme de plantes libériennes prébroyées dans le dispositif de broyage comprenant l'aspiration desdites matières premières renouvelables par le biais d'un conduit d'aspiration, les matières premières renouvelables sous forme de plantes libériennes prébroyées aspirées étant libérées au moins partiellement de l'air de transport et des particules de poussière, et
les corps étrangers étant séparés de cette matière végétale broyée par gravité après l'étape c), lors de l'amenée au dispositif de broyage ;
e) broyer les matières premières renouvelables sous forme de plantes libériennes prébroyées dans le dispositif de broyage ; et
f) récupérer la matière végétale broyée,
les matières premières renouvelables sous forme de plantes libériennes étant soumises, avant le prébroyage,
à un processus de rouissage,
les matières premières renouvelables sous forme de plantes libériennes amenées au prébroyage,
la matière végétale amenée au broyage et la matière végétale amenée à la récupération selon l'étape f) présentant de la chènevotte et l'étape de prébroyage c) et/ou l'étape de broyage e) étant exécutées de telle sorte que des fibres végétales et des brins de chènevotte sont au moins partiellement liés entre eux au sein de la matière végétale broyée récupérée.

2. Procédé selon la revendication 1, **caractérisé en ce que** les matières premières renouvelables sont sélectionnées parmi le groupe composé de chanvre, lin, jute, sisal, colza, coco, kénaf, ortie, ramie, miscanthus et jonc ou à partir de mélanges de ces matières,
en particulier sélectionnées parmi le groupe composé de chanvre, jute, ortie, lin, kénaf, ramie et miscanthus ou de mélanges quelconques de celles-ci.

3. Procédé selon la revendication 1 ou 2, **caractérisé en ce que**
les matières premières renouvelables sous forme de plantes libériennes sont soumises à un rouissage sur champ avant le prébroyage.

4. Procédé selon l'une quelconque des revendications précédentes, **caractérisé en ce que** les matières premières renouvelables sous forme de plantes libériennes récoltées sont essentiellement exemptes de parties de racines et/ou exemptes de parties de la plante contenant des graines et/ou des fruits.

5. Procédé selon l'une quelconque des revendications précédentes, **caractérisé en ce que** la largeur du disque de découpe de la cisaille à rotors ou de la déchiqueteuse à rotors se trouve dans la plage de 4 à 15 cm, de préférence dans la plage de 5 à 12 cm ou dans la plage de 7 à 10 cm, et/ou **en ce que**
le diamètre du disque de découpe se trouve dans la plage de 300 à 900 mm, de préférence dans la plage de 400 à 800 mm ou dans la plage de 600 à 700 mm, et/ou **en ce que** la cisaille à rotors ou la déchiqueteuse à rotors comprennent deux axes de découpe, en particulier fonctionnant l'un en sens inverse de l'autre.

6. Procédé selon l'une quelconque des revendications précédentes, **caractérisé en ce que** la cisaille guillotine comprend ou utilise au moins une lame en particulier linéaire, mobile ou en mouvement, essentiellement transversale par rapport à la direction du déplacement de l'écoulement des matières premières renouvelables, en particulier des plantes libériennes, prébroyées.

7. Procédé selon l'une quelconque des revendications précédentes, **caractérisé en ce que** la récupération des matières premières renouvelables broyées comprend l'aspiration de celles-ci par un conduit d'aspiration après l'étape e).

8. Procédé selon l'une quelconque des revendications précédentes, **caractérisé en ce que** les matières premières renouvelables sous forme de plantes libériennes prébroyées aspirées sont libérées de l'air de transport et des particules de poussière au moyen au moins d'un cyclone dépoussiéreur et/ou d'un condensateur et/ou **en ce que** les matières premières renouvelables sous forme de plantes libériennes broyées sont au moins partiellement libérées de l'air de transport et des particules de poussière, en particulier à l'aide d'au moins un cyclone dépoussiéreur et/ou d'un condensateur.

9. Procédé selon l'une quelconque des revendications précédentes, **caractérisé en ce que** le prébroyage selon l'étape c) et le broyage selon l'étape e) sont exécutés de manière à ce que principalement des fibres végétales et/ou de la chènevotte, en particulier des fibres végétales et de la chènevotte ayant une longueur moyenne, en particulier une longueur absolue, dans la plage de 2 à 15 cm, en particulier dans la plage de 3 à 12 cm ou dans la plage de 4 à 10 cm, soient obtenues après l'étape e), en particulier de 70 à 99 % massique ou de 80 à 99 % massique du poids total de la matière végétale broyée récupérée, respectivement par rapport au poids total de la matière végétale broyée récupérée.

10. Procédé selon l'une quelconque des revendications précédentes, **caractérisé en ce que**, lors de l'amenée au dispositif de broyage et après l'étape e), en particulier avant la récupération des matières premières renouvelables sous forme de plantes libériennes broyées, les corps étrangers, en particulier les pierres, la terre et/ou les pièces métalliques, sont séparés de cette matière végétale broyée par gravité, après l'étape c).

11. Procédé selon l'une quelconque des revendications précédentes, **caractérisé en ce que** les tiges des matières premières renouvelables sous forme de plantes libériennes récoltées présentent une épaisseur moyenne, de préférence une épaisseur maximale, jusqu'à 6 cm, de préférence jusqu'à 5 cm ou jusqu'à 4,5 cm ou dans la plage de 0,2 à 3,5 cm.

12. Procédé selon l'une quelconque des revendications précédentes, **caractérisé en ce que** les matières premières renouvelables sous forme de plantes libériennes amenées au prébroyage, la matière végétale amenée au broyage et la matière végétale amenée à la récupération selon l'étape f) présentent de la chènevotte de chanvre.

13. Procédé selon l'une quelconque des revendications précédentes, **caractérisé en ce que** la chènevotte reste en majeure partie, en particulier essentiellement en totalité présente dans la matière prébroyée et dans la matière broyée.
